Europäisches Patentamt

(19) European Patent Office

Office européen des brevets

(11) **EP 0 679 615 B1**

(12) **EUROPEAN PATENT SPECIFICATION**

(45) Date of publication and mention
of the grant of the patent:
**21.07.1999 Bulletin 1999/29**

(51) Int. Cl.[6]: **C04B 35/495**, C04B 35/01,
C04B 35/45

(21) Application number: **94302354.9**

(22) Date of filing: **31.03.1994**

(54) **Ceramic substrates for superconducting films**

Keramiksubstrate für supraleitende Schichten

Substrats en céramique pour couches supraconductrices

(84) Designated Contracting States:
**DE FR GB**

(43) Date of publication of application:
**02.11.1995 Bulletin 1995/44**

(73) Proprietor:
**Council of Scientific and
Industrial Research
New Delhi 110 001 (IN)**

(72) Inventors:
• **Koshy, Jacob
Trivandrum-695 019 (IN)**
• **Thomas, Jijimon K.
Trivandrum-695 019 (IN)**
• **Kurian, Jose
Trivandrum-695 019 (IN)**
• **Yadava, Yogendra P.
Trivandrum-695 019 (IN)**
• **Damodaran, Alathoor D.
Trivandrum-695 019 (IN)**

(74) Representative:
**Skailes, Humphrey John
Frank B. Dehn & Co.,
European Patent Attorneys,
179 Queen Victoria Street
London EC4V 4EL (GB)**

(56) References cited:
• **PHYSICA C, vol.225, 1994 pages 101 - 104
KOSHY ET AL. 'Growth of ybco thin films.....on
polycrystalline GdBa2Nbo6,a new perovskite
ceramic substrate'**
• **MATERIALS LETTERS, vol.17, 1993 pages 393 -
397, XP413390 KOSHY ET AL. 'Development and
characterization of GdBa2NbO6,a new ceramic
substrate for perovskite thick films.'**
• **ZEITSCHRIFT FÜR ANORGANISCH UND
ALLGEMEINE CHEMIE vol. 482, 1981,, pages 143
- 153 WITTMAN ET AL. 'Über die Ordnung von
B(III) und M(V) in Perowskiten vom Typ
A(II)2B(III)M(V)O6 (A(II)=Ba,Sr;M(V)=Sb,Nb,Ta)
"Experimentelle Angaben"'**
• **DATABASE WPI Week 9413, Derwent
Publications Ltd., London, GB; AN 94-105083 &
JP-A-6 053 556 (NEC) 25 February 1994**

**Description**

This invention relates to the use of ceramic substrates for $YBa_2Cu_3O_{7-\delta}$ (YBCO) films and a process for the preparation of superconducting YBCO thick films on the substrates.

In the preparation of YBCO thick and thin films, choice of substrate is a key factor. Chemical non-reactivity between the substrate and YBCO is the most crucial factor for obtaining a superconducting high $T_{c(o)}$ film.

Besides, for microwave applications, the substrate should have a very low dielectric constant ($\approx 10$) and loss factor ($10^{-4}$-$10^{-5}$) at GHz frequencies [Brandle and Fratello, J. Mater. Res., 5, 2160 (1990)]. For epitaxial growth of the film, lattice matching is also important. MgO is the most widely reported substrate material which satisfies the above substrate characteristics reasonably well for YBCO films. However, MgO forms an interlayer of Ba salt at the YBCO-MgO interface if the temperature of processing is above 700°C [Koinuma et al., Jpn J. Appl. Phys., 27, L1216 (1988), Cheung and Ruckenstein, J. Mater. Res., 4, 1 (1989) and Preng et al., Supercond. Sci. Technol 3, 233 (1990)]. At higher temperatures (>700°C) chemical interdiffusion of the cation across the film boundary in YBCO-MgO is quite prominent [Hu et al., "Advances in Superconductivity", (Proc. 1st Inter. Symp. on Supercond. ISS 88, Aug. 28-31, 1988, Nagoya, Japan), Edited by K. Kitazawa and I. Ishiguro, Springer-Verlag, Tokyo, p.647 (1989) and Li et al., J. Mater. Sci., 26, 1057 (1991)]. In particular, in the case of thick film preparation of YBCO using MgO substrate, where the processing temperature required is well above 900°C, the Ba salt formation and cation interdiffusion reduce the superconducting transition $T_{c(o)}$ of YBCO thick film very appreciably [Bansal, Mater. Lett., 13, 7 (1992)]. Other commercially available substrates such as Si, $SiO_2$, $Al_2O_3$, $SrTiO_3$, $GaAlO_3$, $LaAlO_3$ etc either chemically react with YBCO or have a high dielectric constant and loss factor, which makes them unsuitable or less attractive as substrates for YBCO at microwave frequencies. The main object of the present invention is to provide ceramic substrates which are chemically compatible with YBCO and have very low dielectric constant and loss factor, making them suitable for microwave applications.

Thus, we have now found ceramic substrates useful for the preparation of superconducting YBCO films. These substrates have the formula $REBa_2MO_6$ wherein RE represents at least one rare earth metal (La, Ce, Pr, Nd, Pm, Sm, Eu, Gd, Tb, Dy, Ho, Er, Tm, Yb, Lu) and M represents at least one of the metals Nb, Sb, Sn, Hf and Zr (excluding the material in which RE is Gd and M is Nb).

In addition, we have successfully screen-printed a thick YBCO film with a zero transition temperature $T_{c(o)} = 92K$ on these substrates for the first time.

The substrates may be prepared by a process which comprises:

(i) reacting, salts of the rare earth metal, barium and Nb, Sb, Sn, Hf or Zr in an organic medium,
(ii) pressing the resultant mixture in the form of pellets,
(iii) calcining the pellets by heating at a temperature in the range of 1000° to 1200°C,
(iv) repeating the calcination process for 30 to 45h, preferably 12h for each calcination, at temperature in the range of 1000° to 1200°C until a highly homogeneous mixture is formed,
(v) grinding the calcined material and pelletising at a pressure in the range of 3 to 6 tons/cm$^2$, and
(vi) sintering the resultant product at a temperature in the range of 1200° to 1600°C for a period of 10 to 30h, preferably 20h, and then furnace cooling to room temperature.

The salts of the rare earths, barium and other metals used may be oxides, carbonates or nitrates. The purity of the salts may be of 99%. The organic medium used may be selected from organic solvents such as acetone, ethyl alcohol and isopropyl alcohol. Three multiple calcinations of the pellets may be conducted at 1000° to 1200°C for a period ranging from 10 to 15h, preferably 12h for each calcination. The sintering of the final product may be effected for a period of 10 to 30h, preferably for 20h.

In view of the suitability of $REBa_2MO_6$ substrates, we have successfully screen-printed a thick film of YBCO with a zero superconducting transition upto 92K on these substrates.

Thus, the invention also relates to a process for the preparation of superconducting YBCO thick films on a ceramic substrate as defined above, which comprises:

(i) mechanically polishing the ceramic substrate to give a highly smooth and shining surface,
(ii) preparing a thick film of YBCO by known methods,
(iii) screen printing YBCO on the substrate using a mesh size in the range of 325,
(iv) drying the resulting film at a temperature in the range of 100° to 150°C,
(v) heating the dried film at a rate of 150° to 250°C/h upto 950°C to 1000°C and soaking at this temperature for 1 to 5 minutes,
(vi) cooling the film at a rate of 400° to 600°C/h to bring down the temperature to 800° to 900°C and keeping the film at this temperature for a period of 20 to 40 minutes, and
(vii) cooling the film at a rate of 150° to 250°/h down to 600° to 400°C and keeping the film at this temperature for a period of 1 to 2h. Finally, the film is furnace cooled to room temperature.

All the above steps being carried out in the presence of air or flowing oxygen.

The invention is described in more detail in the Examples given below. Example 1 is included for reference only. The preparation of $GdBa_2NbO_6$ substrates for use in the preparation of YBCO films is described in Materials Letters 17 (1993) 393-397.

## Example 1

**Preparation of ceramic substrate of the formula $GdBa_2NbO_6$**

$GdBa_2NbO_6$ was prepared by solid state reaction method. $Gd_2O_3$, $BaCO_3$ and $Nb_2O_5$ (purity 99%) were taken in stoichiometric ratio, mixed thoroughly in acetone medium and calcined in air at 1150°C for 12h with two intermediate grindings. The resultant mixture was powdered and pressed at a pressure of 4 tons/$cm^2$ in the form of circular pellets and sintered in air at 1450°C for 20h.

## Example 2

**Preparation of ceramic substrate of the formula $NdBa_2SbO_6$**

$NdBa_2SbO_6$ was prepared by solid state reaction method. $Nd_2O_3$, $BaCO_3$ and $Sb_2O_3$ (purity 99%) were taken in stoichiometric ratio, mixed thoroughly in acetone medium and calcined in air at 1100°C for 10h with two intermediate grindings. The resultant mixture was powdered and pressed at a pressure of 5 tons/$cm^2$, in the form of circular pellets and sintered in air at 1400°C for 16h.

## Example 3

**Preparation of ceramic substrate of the formula $SmBa_2NbO_6$**

$SmBa_2NbO_6$ was prepared by solid state reaction method. $Sm_2O_3$, $BaCO_3$ and $Nb_2O_5$ were taken in stoichiometric ratio, wet mixed in acetone medium and calcined in air at 1200°C for 15h with two intermediate grindings. Calcined powder was finally, ground and pelletised at a pressure of 5 tonnes/$cm^2$ in the form of circular pellets and sintered at 1350°C for 15h in air.

## Structure determination

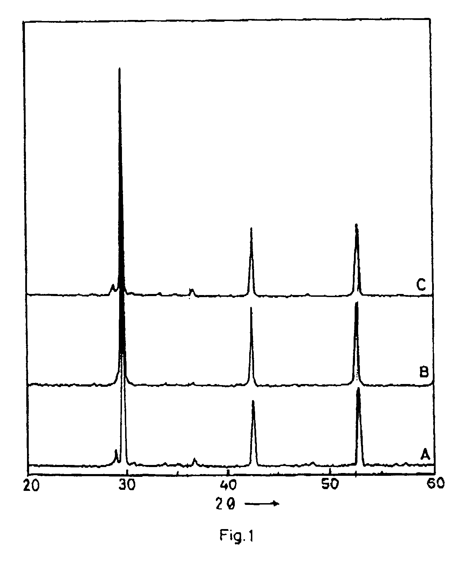

The structure of the sintered materials was examined by X-ray diffraction (XRD) method and it is found that all these materials are isostructural having a cubic perovskite structure as shown in the XRD patterns in Fig.1 (Sheet No.1) of the drawings accompanying this specification for three typical samples $GdBa_2NbO_6$ (Example 1), $NdBa_2SbO_6$ (Example 2) and $SmBa_2NbO_6$ (Example 3). In tables 1a to c we have given the computerised XRD data for these materials.

Table 1(a)

| Computerised XRD data $GdBa_2NbO_6$ | | | | | |
|------|--------|-----------|-------|-------|------|
| No. | 2 | Intensity | Width | d | I/Io |
| 1 | 29.780 | 7988 | 0.459 | 2.998 | 100 |
| 2 | 36.730 | 594 | 0.480 | 2.445 | 7 |
| 3 | 42.660 | 2358 | 0.525 | 2.118 | 30 |
| 4 | 52.890 | 2882 | 0.555 | 1.730 | 36 |

Table 1(b)

| Computerised XRD data $NdBa_2SbO_6$ | | | | | |
|---|---|---|---|---|---|
| No. | 2 | Intensity | Width | d | I/Io |
| 1 | 29.740 | 9506 | 0.375 | 3.002 | 100 |
| 2 | 36.690 | 250 | 0.210 | 2.447 | 3 |
| 3 | 42.510 | 2776 | 0.420 | 2.125 | 29 |
| 4 | 52.680 | 3004 | 0.555 | 1.736 | 32 |

Table 1(c)

| Computerised XRD data $SmBa_2NbO_6$ | | | | | |
|---|---|---|---|---|---|
| No. | 2 | Intensity | Width | d | I/Io |
| 1 | 29.730 | 7988 | 0.420 | 3.003 | 100 |
| 2 | 36.630 | 476 | 0.270 | 2.451 | 6 |
| 3 | 42.570 | 2569 | 0.435 | 2.122 | 32 |
| 4 | 52.780 | 2750 | 0.495 | 1.733 | 34 |

## Dielectric properties

The dielectric properties of the substrate materials were measured at 30Hz to 13 MHz frequencies and values of the dielectric constant ($\epsilon$') and loss factor (tan $\delta$) at 13 MHz frequency are 24 and $10^{-4}$ respectively at room temperature. At GHz frequencies the values of $\epsilon$' and tan $\delta$ are found to be 6 and $10^{-5}$ respectively, which are ideally suitable for microwave applications.

## Chemical compatibility with YBCO

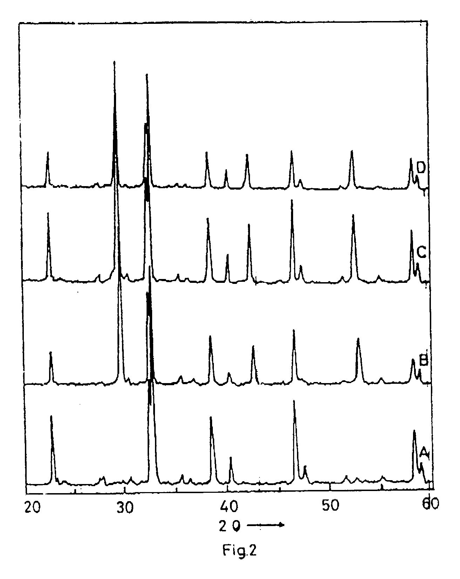

The most important charactertistics of $REBa_2MO_6$, which makes these materials ideal as substrates for YBCO, is their chemical non-reactivity with YBCO even at extreme processing conditions. The chemical reactivity between YBCO and $REBa_2MO_6$ was studied by mixing 1:1 molar mixture of YBCO and $REBa_2MO_6$ and heating the pressed samples at 950°C for 15h. In Fig.2 (sheet No.2), the XRD pattern of a pure $YBa_2Cu_3O_{7-\delta}$ superconductor (Fig.2a) and three representative XRD patterns of annealed $YBa_2Cu_3O_{7-\delta}$ - $GdBa_2NbO_6$ (Fig.2b). $YBa_2Cu_3O_6$ - $NdBa_2SbO_6$ (Fig.2c) and $YBa_2Cu_3O_{7-\delta}$ - $SmBa_2NbO_6$ (Fig.2d) samples mixed in 1:1 molar ratio and heated at 950°C for 15h have been given. The XRD patterns clearly show that there is no additional phase formed besides YBCO and $REBa_2MO_6$ in the composite. This indicates that there is no reaction taking place between YBCO and $REBa_2MO_6$ even under severe heat treatment. $REBa_2MO_6$ are insulating oxides with room temperature resistivities of the order of $10^{10}$ $\Omega$cm. Detailed percolation studies carried out on YBCO-$REBa_2MO_6$ composites also showed that the presence of $REBa_2MO_6$ unto 60 vol% in the composite did not show any detrimental effect on the superconducting transition temperature of YBCO.

Because of the excellent dielectric properties and chemical compatibility of the novel substrates with YBCO as described above, we also invented a process for the preparation of superconducting $YBa_2Cu_3O_{7-\delta}$ thick films on the newly developed ceramic substrates of $REBa_2MO_6$ as described above. In other words, in view of the suitability of $REBa_2MO_6$ substrates, we have successfully screen printed a thick film of YBCO with a zero superconducting transition upto 92K on these substrates.

We quote a few prior art references regarding the formation of superconducting films here below:

Superconducting thick films have wide applications in microwave integrated circuits, transmission lines and other microelectronic devices [Alford et al., Supercond. Sci. Technol., 4, 433 (1991), Khare et al., Supercond. Sci. Technol., 4, 107 (1991) and Alford et al., Nature, 349, 680 (1991)]. Screen printing is a straight forward and highly economical process for the deposition of thick films of $YBa_2Cu_3O_{7-\delta}$ (YBCO) superconductors [Budhani et al., Appl. Phys. Lett., 51, 1277 (1987), Shih and Riu, Appl. Phys. Lett., 52, 748 (1988), Koinuma et al., Jpn. J. Appl. Phys., 26, L399 (1987), Bansal and Simon, Appl. Phys. Lett., 53, 603 (1988) and Bansal, Mater. Lett., 13, 7 (1992)]. In the preparation of superconducting thick films, the choice of substrate is a key factor. Chemical non-reactivity between the substrates and YBCO is most crucial for obtaining superconducting films with high transition temperature (90K).

Our process for fabrication of YBCO screen-printed thick film on $REBa_2MO_6$ substrates is given below:

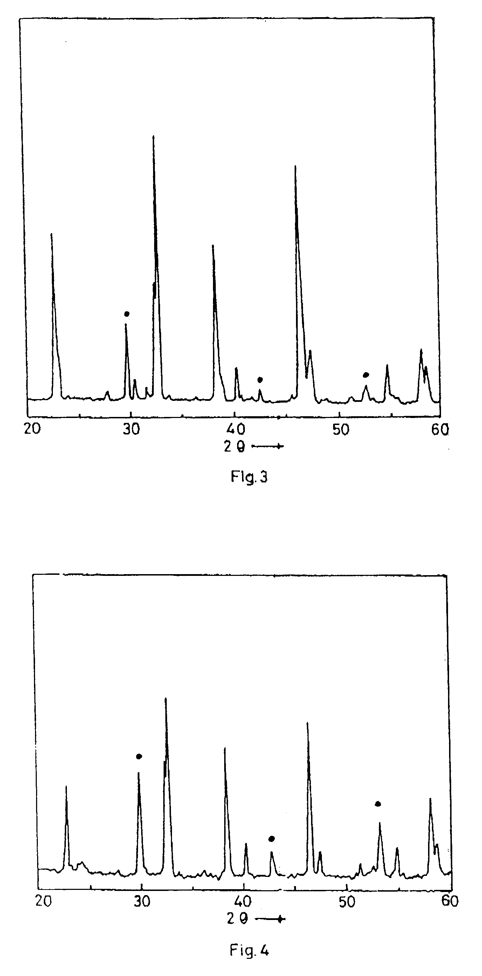

Before screen-printing YBCO, $REBa_2MO_6$ substrates were polished mechanically to get highly smooth and shining surfaces. Thick film paste of YBCO, which we used for screen-printing was made by mixing YBCO powder with an organic vehicle and well mixed paste was achieved by hand milling. Film thickness was controlled via viscosity control of YBCO paste. Thick film of this YBCO paste was than screen-printing on $REBa_2MO_6$ substrate using a mesh size of 325. Printed films were dried at 100° to 150°C for 2 to 3h. Dried films were heated in a programmable furnace at a rate of 150° to 250°C/h upto 950-1000°C and soaked at this temperature for 1-5 min. The films were cooled down at a rate of 400°-600°C/h and brought down to 800°-900°C and kept at this temperature for 20-40 min and films were then cooled down at a rate of 150°C to 250°C/h upto 600°-400°C and kept at this temperature for 1 to 2h and after that cooled down to room temperature. All the above processing were done either in air or in flowing oxygen. The structure of the film was examined by X-ray diffraction method and XRD patterns of two typical screen-printed YBCO films on $NdBa_2SbO_6$ and $SmBa_2NbO_6$ substrates are shown in Figs.3 and 4 (given in sheet Nos.3 and 4) respectively. The XRD patterns of these YBCO thick films showed that except for the characteristic peaks of $NdBa_2SbO_6$ and $SmBa_2NbO_6$ substrates, all other peaks could be assigned to a phase pure orthorhombic superconducting YBCO structure.

The following examples illustrate the preparation of superconducting films:

**Example 4**

**Preparation of superconducting film using ceramic substrate of the formula $NdBa_2SbO_6$**

A $YBa_2Cu_3O_{7-\delta}$ paste was made by mixing fine $YBa_2Cu_3O_{7-\delta}$ powder with organic vehicle and its viscosity was controlled by adding fish oil. This paste was screen-printed on a highly polished $NdBa_2SbO_6$ substrate using a screen of 325 mesh size. The film, after drying at 100°C for 90 minute was heated in a programmable furnace at a rate of 3°C/minute upto 980°C and soaked at this temperature for 5 minute. It was then cooled at a rate of 10°C/minute to bring down the temperature to 900°C and kept at 900°C for 30 minute. It was then cooled to 600°C at a rate of 4°C/minute and again kept at this temperature for 60 minute. The film was finally furnace cooled to room temperature. Entire processing was carried out in air.

**Example 5**

**Preparation of superconducting film using ceramic substrate of the formula $SmBa_2NbO_6$**

A $YBa_2Cu_3O_{7-\delta}$ paste was made by mixing fine $YBa_2Cu_3O_{7-\delta}$ powder with organic vehicle and its viscosity was controlled by adding fish oil. The paste was screen-printed on highly polished $SmBa_2NbO_6$ substrate using a screen of 325 mesh size. The film, after drying at 120°C for 60 minutes was heated in a programmable furnace at a rate of 3°C/minute upto 980°C, soaked at this temperature for 5 minutes. It was then cooled at a rate of 8°C/minute to bring down the temperature to 900°C for 30 minutes. It was then cooled to 550°C at a rate of 8°C/minute and again kept at this temperature for 60 minutes. The film was finally furnace cooled to room temperature. The entire processing was done in air.

The structure of the film was examined by X-ray diffraction method. The XRD patterns of two typical screen-printed YBCO films on $NdBa_2SbO_6$ (Example 4) and $SmBa_2NbO_6$ (Example 5) substrates are shown in Figs. 3 and 4 of the drawings (Sheet Nos.3 and 4) accompanying this specification. The XRD pattern of these YBCO thick films showed that except for the characteristic peaks of $NdBa_2SbO_6$ and $SmBa_2NbO_6$ substrates, all other peaks could be assigned to a phase pure orthorhombic superconducting YBCO structure.

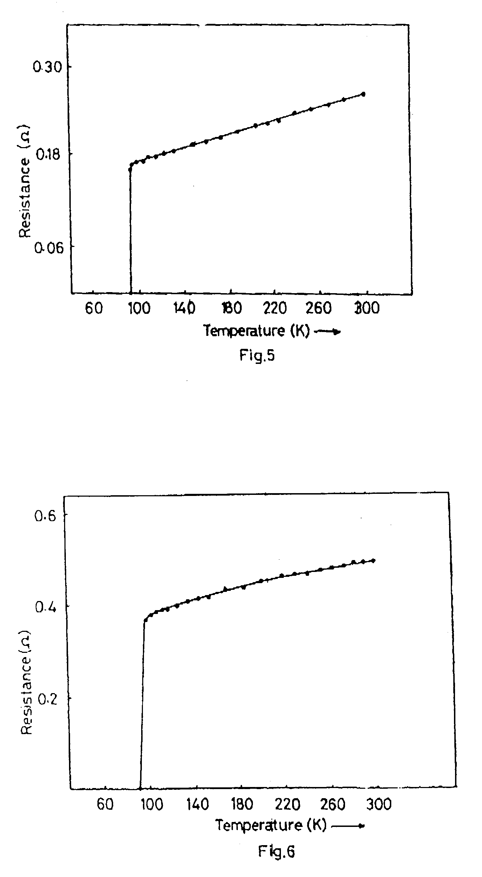

Superconductivity in these YBCO screen-printed thick films on $REBa_2MO_6$ substrates were studied by temperature-resistance measurements. The films show a metallic behaviour in the normal state and give superconducting transition temperature of 88-94K ($T_c$ onset) and 85-92K ($T_{c(o)}$ as shown in the two representative examples given in Figs.5 and 6 (sheet Nos.5 and 6). These films give a current density of the order of $10^5$ A/cm$^2$.

Figure Captions

Fig.1    X-ray diffraction patterns of sintered (A) $GdBa_2NbO_6$, (B) $NdBa_2SbO_6$ and (c) $SmBa_2NbO_6$.

Fig.2    X-ray diffraction patterns of (A) $YBa_2Cu_3O_7$. (B) $YBa_2Cu_3O_{7-\delta}$ - $GdBa_2NbO_6$, (c) $YBa_2Cu_3O_{7-\delta}$-$NdBa_2SbO_6$ and (D) $YBa_2Cu_3O_{7-\delta}$ - $SmBa_2NbO_6$.

Fig.3    X-ray diffraction patterns of screen-printed $YBa_2Cu_3O_{7-\delta}$ thick film on $NdBa_2SbO_6$ (substrate peaks are marked by "●").

Fig.4    X-ray diffraction pattern of screen-printed $YBa_2Cu_3O_{7-\delta}$ thick film on $SmBa_2NbO_6$ (substrate peaks are marked by "●").

Fig.5    Temperature-resistance curve of screen-printed $YBa_2Cu_3O_{7-\delta}$ thick film on $NdBa_2SbO_6$ substrate.

Fig.6    Temperature-resistance curve of screen-printed $YBa_2Cu_3O_{7-\delta}$ thick film on $SmBa_2NbO_6$ substrate.

## Claims

1.  The use of a ceramic material as a substrate for the preparation of YBCO superconducting films, said material having the formula $REBa_2MO_6$ where RE represents at least one rare earth metal (La, Ce, Pr, Nd, Pm, Sm, Eu, Gd, Tb, Dy, Ho, Er, Tm, Yb, Lu) and M represents at least one of the metals Nb, Sb, Sn, Hf and Zr, excluding the material in which RE is Gd and M is Nb.

2.  A use as claimed in claim 1 in which RE is Gd, Nd or Sm and M is Nb or Sb.

3.  A process for the preparation of superconducting YBCO thick films on a ceramic substrate as defined in claim 1, said process comprising:

    (i) mechanically polishing the ceramic substrate to give a highly smooth and shining surface,
    (ii) preparing a thick film of YBCO by known methods,
    (iii) screen-printing YBCO on the substrate using a mesh size in the range of 325,
    (iv) drying the resulting film at a temperature in the range of 100 to 150°C,
    (v) heating the dried film at a rate of 150° to 250°C/h up to 950° to 1000°C and soaking at this temperature for 1 to 5 minutes,
    (vi) cooling the film at a rate of 400° to 600°C/h to bring down the temperature to 800° to 900°C and keeping the film at this temperature for a period of 20 to 40 minutes, and
    (vii) cooling the film at a rate of 150° to 250°C/h down to 600° to 400°C and keeping the film at this temperature for a period of 1 to 2h, all the above steps being carried out in the presence of air or flowing oxygen.

4.  A ceramic substrate as defined in claim 1 or claim 2 having a YBCO superconducting film thereon.

## Patentansprüche

1.  Verwendung eines keramischen Materials als Substrat zur Herstellung von supraleitenden YBCO-Filmen, wobei das Material die Formel $REBa_2MO_6$ aufweist, worin RE mindestens ein Seltenerdmetall (La, Ce, Pr, Nd, Pm, Sm, Eu, Gd, Tb, Dy, Ho, Er, Tm, Yb, Lu) bedeutet und M mindestens eines der Metalle Nb, Sb, Sn, Hf und Zr wiedergibt, ausgenommen das Material, worin RE Gd ist und M Nb ist.

2.  Verwendung nach Anspruch 1, worin RE Gd, Nd oder Sm ist und M Nb oder Sb ist.

3.  Verfahren zur Herstellung von supraleitenden YBCO-Dickfilmen auf einem keramischen Substrat nach Anspruch 1, wobei das Verfahren umfaßt:

    (i) mechanisches Polieren des keramischen Substrats zu einer sehr glatten und glänzenden Oberfläche,
    (ii) Herstellen einer Dickfilmpaste aus YBCO gemäß bekannter Verfahren,
    (iii) Siebdrucken von YBCO auf das Substrat unter Verwendung einer Maschengröße im Bereich von 325,
    (iv) Trocknen des erhaltenen Films bei einer Temperatur im Bereich von 100 bis 150°C,
    (v) Erhitzen des getrockneten Films mit einer Rate von 150° bis 250°C/h auf 950°C bis 1000°C und Halten bei dieser Temperatur für 1 bis 5 Minuten,
    (vi) Kühlen des Films mit einer Rate von 400° bis 600°C/h, um die Temperatur auf 800° bis 900°C sinken zu lassen und Halten des Films bei dieser Temperatur für einen Zeitraum von 20 bis 40 Minuten, und

(vii) Kühlen des Films mit einer Rate von 150° bis 250°C/h herab auf 600° bis 400°C und Halten des Films bei dieser Temperatur für einen Zeitraum von 1 bis 2 h, wobei alle vorstehend genannten Schritte in Anwesenheit von Luft oder strömendem Sauerstoff ausgeführt werden.

4. Keramisches Substrat nach Anspruch 1 oder Anspruch 2 mit einem supraleitenden YBCO-Film darauf.

**Revendications**

1. Utilisation d'un matériau en céramique en tant que substrat pour la préparation de fils supraconducteurs de YBCO, ledit matériau ayant pour formule $REBa_2MO_6$ dans laquelle RE représente au moins un des métaux de terre rare suivants (La, Ce, Pr, Nd, Pm, Sm, Eu, Gd, Tb, Dy, Ho, Er, Tm, Yb, Lu) et M représente au moins un des métaux Nb, Sb, Sn, Hf et Zr, à l'exclusion d'un matériau dans lequel RE est Gd et M est Nb.

2. Utilisation selon la revendication 1 dans laquelle RE est Gd, Nd ou Sm et M est Nb ou Sb.

3. Procédé pour la préparation de films épais supraconducteurs de YBCO sur un substrat en céramique tel que défini dans la revendication 1, ledit procédé comprenant les étapes consistant à :

   (i) polir mécaniquement le substrat en céramique de façon à obtenir une surface très lisse et brillante,
   (ii) préparer un film épais de YBCO par mise en oeuvre de méthodes connues,
   (iii) imprimer au tamis YBCO sur le substrat, le numéro du tamis étant d'environ 325 mesh,
   (iv) sécher le film résultant à une température comprise entre 100 et 150° C,
   (v) chauffer le film séché à une vitesse de 150° à 250° C par heure jusqu'à 950-1000° C, et maintenir à cette température pendant 1 à 5 minutes,
   (vi) refroidir le film à une vitesse de 400° à 600° C par heure, de façon à baisser la température jusqu'à 800°-900° C et maintenir le film à cette température pendant une durée de 20 à 40 minutes, et
   (vii) refroidir le film à une vitesse de 150 à 250° C par heure jusqu'à 600°-400° C et maintenir le film à cette température pendant une durée de 1 à 2 heures,
   toutes les étapes précédentes étant mises en oeuvre en présence d'air ou d'un courant d'oxygène.

4. Substrat en céramique tel que défini à la revendication 1 ou à la revendication 2, muni d'un film supraconducteur de YBCO.

$2\theta \longrightarrow$

Fig.1

EP 0 679 615 B1

Fig.2

9

Fig. 3

Fig. 4

Fig.5

Fig.6